# EUROPÄISCHE PATENTSCHRIFT

(11) **EP 0 775 619 B1**
(45) Veröffentlichungstag und Bekanntmachung des Hinweises auf die Patenterteilung: **28.07.1999**
(21) Anmeldenummer: 96115104.0
(22) Anmeldetag: 20.09.1996
(51) Int. Cl.: B60T 17/08, F15B 15/22, F15B 15/10

(54) **Arbeitszylinder**
Power cylinder
Verin de travail

(30) Priorität: 23.11.1995 DE 19543593
(43) Veröffentlichungstag der Anmeldung: 28.05.1997
(73) Patentinhaber: WABCO GmbH, 30453 Hannover (DE)
(72) Erfinder: Pohl, Wolfgang, 30826 Garbsen (DE); Runge, Hartmut, 31832 Springe (DE)
(74) Vertreter: Schrödter, Manfred, Dipl.-Ing.

(56) Entgegenhaltungen:
- EP-A- 0 123 866
- EP-A- 0 279 930
- WO-A-96/26093
- DE-A- 3 239 971
- DE-A- 3 241 548
- D. WILL, H. STRÖHL: "Einführung in die Hydraulik und Pneumatik" , 1981, VEB VERLAG TECHNIK BERLIN, BERLIN

## Beschreibung

Die Erfindung betrifft einen Arbeitszylinder nach dem Oberbegriff des Patentanspruchs 1.

Ein solcher Arbeitszylinder ist aus der DE-AS 19 21 622 bekannt. In dessen Federspeicherteil trennt ein einerseits von dem Druck in einer Lösekammer und andererseits von einer Speicherfeder beaufschlagter Federspeicherkolben die Lösekammer von einer die Speicherfeder aufnehmenden Federkammer. Solange der Druck in der Lösekammer den Wert eines Lösedrucks erreicht oder überschreitet, überwindet die von diesem Druck und der Fläche des Federspeicherkolbens bestimmte Druckkraft die Speicherfeder und hält den Federspeicherteil gelöst. Wird zwecks Betätigung des Federspeicherteils der Druck in der Lösekammer unter den Lösedruck gesenkt, gibt der Federspeicherteil den Überschuß der Kraft der Speicherfeder über die Druckkraft als Federspeicherkraft ab. Mit dieser Kraftabgabe geht im Normalfall eine Verschiebung des Federspeicherkolbens in Richtung der erwähnten Federkraft und damit eine Vergrößerung der Federkammer einher. Umgekehrt erfolgt dann bei einem Wiederanstieg des Drucks in der Lösekammer zwecks Lösens des Federspeicherteils eine Rückbewegung des Federspeicherkolbens und damit eine Verkleinerung der Federkammer. Damit diese Volumenänderungen der Federkammer ohne das Auftreten von Unterdruck bzw. Überdruck in der Federkammer, wodurch die Kraftabgabe bzw. das Lösen des Federspeicherteils nachteilig beeinflußt werden könnte, möglich sind, ist die Federkammer über eine Druckausgleichsleitung mit einer Atmosphärenkammer des Betriebsteils verbunden, welche direkt oder über eine Atmungseinrichtung an die umgebende Atmosphäre angeschlossen ist.

Da im Normalfall sowohl beim Betätigen und Lösen des Federspeicherteils als auch beim Betätigen und Lösen des Betriebsteils auch die Atmosphärenkammer Volumenänderungen unterworfen ist, findet über deren Anschluß an die umgebende Atmosphäre ein häufiger Luftaustausch zwischen der Atmosphärenkammer und der umgebenden Atmosphäre statt. Der Luftinhalt der Atmosphärenkammer enthält deshalb im Normalfall die Verunreinigungen der Umgebungsluft, die bekanntlich aus deren Wasser- und Staubgehalt sowie aus deren Gehalt an Chemikalien bestehen. Diese Verunreinigungen treten beim Betätigen des Federspeicherteils mit der Luft aus der Atmosphärenkammer durch die Druckausgleichsleitung in die Federkammer über. Sie können hier zu mechanischem Verschleiß und Korrosionsverschleiß der Federkammerinnenwand, die ja zugleich die Lauffläche des Federspeicherkolbens ist, sowie zu Korrosion der Speicherfeder und folglich zu einer Beeinträchtigung der Betriebssicherheit und der Lebensdauer des Arbeitszylinders führen. Diese Gefahr ist besonders groß in dem üblichen Fall, daß bei der Betätigung des Federspeicherteils die Federkammer sich mehr vergrößert als die Atmosphärenkammer sich verkleinert, weil in diesem Fall durch die Atmosphärenkammer hindurch direkt Umgebungsluft in die Federkammer übertritt.

Der Erfindung liegt die Aufgabe zugrunde, mit einfachen Mitteln eine Beeinträchtigung der Betriebssicherheit und der Lebensdauer eines Arbeitszylinders der eingangs genannten Art zu mindern.

Diese Aufgabe wird durch die in dem Patentanspruch 1 angegebene Erfindung gelöst. Fortbildungen und vorteilhafte Ausgestaltungen sind in den Unteransprüchen angegeben.

Arbeitszylinder der eingangs genannten bzw. der erfindungsgemäßen Art sind auf allen technischen Gebieten gebräuchlich, in denen es neben einer von dem Betriebsteil abgegebenen, durch Druck erzeugten, Kraft auf die durch den Federspeicherteil mit rein mechanischen Mitteln erzeugte Kraft ankommt, z. B. bei einem Druckausfall.

Ein beispielhaftes Anwendungsgebiet für solche Arbeitszylinder ist die Fahrzeugtechnik, in welcher diese als Betriebsbrems-, Hilfs- und Feststellbremszylinder oder als Betriebsbrems- und Feststellbremszylinder eingesetzt werden, wobei der Federspeicherteil jeweils die Hilfs- bzw. Feststellbremswirkung erbringt.

Die Erfindung ist zum Einsatz mit allen Druckmitteln geeignet. Im Falle eines anderen Druckmittels als Luft dürfte es allerdings erforderlich sein, Maßnahmen gegen einen eventuellen Austritt von Druckmittel-Leckmengen durch die Atmosphärenkammer in die Atmosphäre vorzusehen.

Die Erfindung wird nunmehr anhand zeichnerisch dargestellter Ausführungsbeispiele erläutert.

Mit gleichen Bezugszeichen für Funktionsgleiche Bauelemente zeigen
- Fig. 1: einen Arbeitszylinder,
- Fig. 2: ein gegenüber Fig. 1 geändertes Detail.

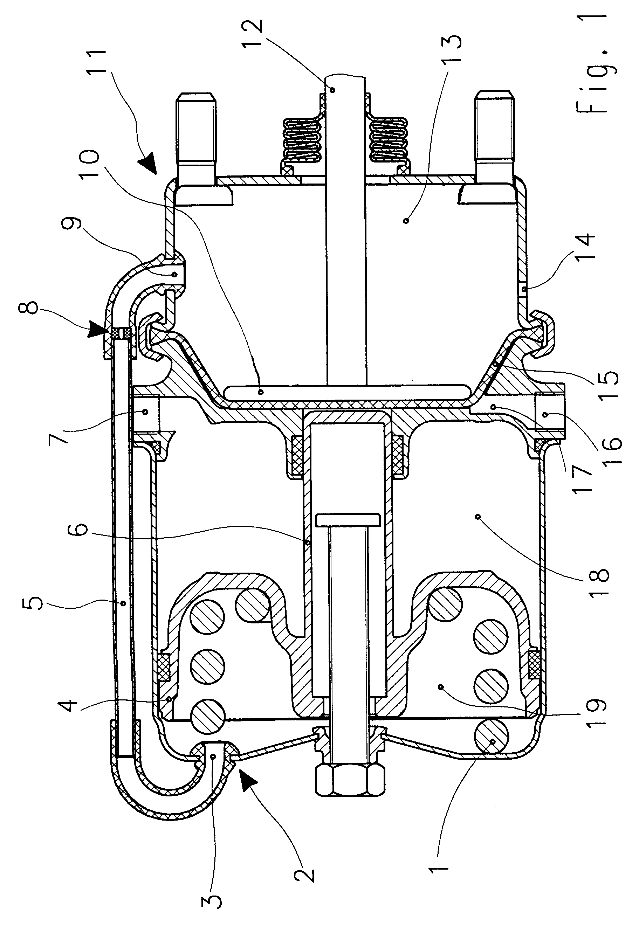

Der in Fig. 1 dargestellte und zum Betrieb mit Luft als Druckmittel vorgesehene Arbeitszylinder besteht aus einem generell mit (2) bezeichneten Federspeicherteil und einem in bekannter und daher nicht näher beschriebener Weise damit zusammengebauten und generell mit (11) bezeichneten Betriebsteil.

In einem nicht näher bezeichneten Zylindergehäuse des Federspeicherteils (2) ist axial verschiebbar und abgedichtet ein Federspeicherkolben (4) geführt. Mit dem Federspeicherkolben (4) ist eine Federspeicher-Kolbenstange (6) verbunden.

Der Federspeicherkolben (4) teilt den Innenraum des Zylindergehäuses in eine Federkammer (19) und eine gegen diese abgedichtete Lösekammer (18) auf. Die Lösekammer (18) ist über einen Druckanschluß (7) mit Druck beaufschlagbar. In der Federkammer (19) ist eine Speicherfeder (1) angeordnet, die sich einerseits an dem nicht bezeichneten Boden des Zylindergehäuses und andererseits an dem Federspeicherkolben (4) abstützt.

Zwischen dem Federspeicherteil (2) und dem Betriebsteil (11) ist eine nicht bezeichnete Gehäusewand vorgesehen. Die Federspeicher-Kolbenstange (6) tritt nach dem Durchdringen der Lösekammer (18) abgedichtet durch diese Gehäusewand hindurch und endet in einer Betriebsdruckkammer (17), die über einen Druckanschluß (16) mit Druck beaufschlagbar ist.

Ein Betriebskolben (10, 15) teilt den Innenraum des nicht bezeichneten Gehäuses des Betriebsteils (11) in die Betriebsdruckkammer (17) und eine Atmosphärenkammer (13) auf und dichtet diese Kammern gegeneinander ab. Der Betriebskolben (10, 15) besteht aus einer in dem Gehäuse des Betriebsteils (11) dicht eingespannten Membran (15) und einem Membranteller (10). Der Betriebskolben kann aber, wie auch der Federspeicherkolben, in nicht dargestellter Weise in jeder anderen geeigneten Bauart ausgeführt sein.

Der Membranteller (10) und damit der Betriebskolben (10, 15) sind mit einer Betriebskolbenstange (12) verbunden, welche die Atmosphärenkammer (13) durchdringt, abgedichtet aus dieser heraustritt und an ihrem außenliegenden Ende eine auf eine bekannte Art geformte und nicht dargestellte Ausbildung zur Verbindung mit einer von dem Arbeitszylinder betätigten Einrichtung aufweist.

Die Federspeicher-Kolbenstange (6) und die Betriebskolbenstange (12) sind zueinander fluchtend angeordnet. Ihre Enden sind so zueinander angeordnet, daß eine Kraft von der Federspeicher-Kolbenstange (6) auf die Betriebskolbenstange (12) übertragen werden kann. Im Interesse einer einfachen Ausbildung der Membran (15) ist diese im Bereich der Enden der Kolbenstangen (6 bzw. 12) durchgehend, so daß sie im Kraftfluß zwischen den Kolbenstangen (6 und 12) liegt.

Die Atmosphärenkammer (13) ist über eine Atmungsloch (14) an die umgebende Atmosphäre angeschlossen. Anstelle des einfachen Atmungslochs (14) kann aber auch in nicht dargestellter Weise eine Atmungseinrichtung einer bekannten Bauart vorgesehen sein.

Das Zylindergehäuse des Federspeicherteils (2) und das Gehäuse des Betriebsteils (11) weisen im Bereich der Federkammer (19) bzw. im Bereich der Atmosphärenkammer (13) Durchbrüche (3 bzw. 9) auf, an die eine die genannten Kammern (13 bzw. 9) verbindende Druckausgleichsleitung (5) angeschlossen ist.

In der Druckausgleichsleitung (5) ist eine Drossel (8) angeordnet. Die Druckausgleichsleitung (5) stellt deshalb eine Drosselleitung dar. Die Eigenschaft einer Drosselleitung kann der Druckausgleichsleitung auch auf jede andere Art verliehen werden. Beispielsweise können der Querschnitt und/oder die Länge der Druckausgleichsleitung entsprechend bemessen werden.

Im unbetätigten Zustand herrschen in der Betriebsdruckkammer (17) Atmosphärendruck und in der Lösekammer (18) ein Druck vom Wert eines Lösedrucks oder ein höherer Druck. Unter "Lösedruck" ist der Druck zu verstehen, bei dem die von diesem Druck auf der Fläche des Federspeicherkolbens (4) erzeugte Druckkraft die Kraft der Speicherfeder ausgleicht. Im Normalfall wird in diesem Zustand der Federspeicherkolben (4), wie dargestellt, gerade gegen die Kraft der Speicherfeder (1) unter Mitnahme der Federspeicher-Kolbenstange (6) in eine dargestellte Lösestellung und häufig gegen einen Gehäuseanschlag geschoben.

Der Betriebskolben (10, 15) wird im unbetätigten Zustand im Normalfall in die dargestellte Lösestellung, in der sich der Membranteller (10) über die Membran (15) an der genannten Gehäusewand abstützt, über die Betriebskolbenstange (12) durch Rückstellmittel in der von dem Arbeitszylinder betätigten Einrichtung geschoben. In nicht dargestellter Weise kann zum Zwecke dieser Rückstellung bzw. zur Unterstützung dieser Rückstellung in der Atmosphärenkammer (13) eine sich einerseits an dem Betriebskolben (10, 15) und andererseits an dem Boden der Atmosphärenkammer (13) abstützende Rückstellfeder angeordnet sein.

Der Betriebsteil (11) wird durch Druckzufuhr zu der Betriebsdruckammer (17) betätigt. Er gibt dann über die Betriebskolbenstange (12) eine durch den Druck und die wirksame Fläche des Betriebskolbens (10, 15) bestimmte Kraft ab.

Der Federspeicherteil (2) wird durch Abbau des Drucks in der Lösekammer (18) betätigt. Sinkt dieser Druck unter den Lösedruck, entsteht an dem Federspeicherkolben (4) und damit in der Federspeicher-Kolbenstange (6) ein Überschuß der Kraft der Speicherfeder (1) über die Druckkraft, welchen der Arbeitszylinder als Federspeicherkraft über die Federspeicher-Kolbenstange (6) und die Betriebskolbenstange (12) abgibt. Ist der Druck in der Lösekammer (18) auf Atmosphärendruck abgesunken, gibt der Arbeitszylinder die volle Kraft der Speicherfeder (1) als Federspeicherkraft ab.

Werden der Betriebsteil (11) und der Federspeicherteil (2) gleichzeitig betätigt, so gibt der Arbeitszylinder über die Betriebskolbenstange (12) die Summe aus der Kraft des Betriebsteils (11) und der Federspeicherkraft ab.

Im Normallfall ist die von dem Arbeitszylinder betätigte Einrichtung nicht in der Lage, die von dem Arbeitszylinder abgegebene Kraft ohne einen Leerweg und ohne Verformungen aufzunehmen. Deshalb ist im Normalfall die Betätigung der Teile des Arbeitszylinders mit einer Bewegung des betreffenden Kolbens (4 bzw. 10, 15) und der betreffenden Kolbenstange (6 bzw. 12) aus der Lösestellung, auf die Zeichnung gesehen, nach rechts verbunden. Wird nur der Federspeicherteil (2) betätigt, so wird die Bewegung von dessen Federspeicherkolben (4) und Federspeicher-Kolbenstange (6) auf die Betriebskolbenstange (12) unter Mitnahme des Betriebskolbens (10, 15) übertragen. Beim Lösen des Federspeicherteils (2) schiebt der steigende Druck in der Lösekammer (18) den Federspeicherkolben (4) und die Federspeicher-Kolbenstange (6) in Richtung der Lösestellung bzw. in die Lösestellung zurück. Dabei schieben die in der betätigten Einrichtung vorgesehenen Rückstellmittel, ebenso wie beim teilweisen oder vollständigen Lösen des Betriebsteils (11), auch den Betriebskolben (10, 15) und die Betriebskolbenstange (12) in Richtung ihrer Lösestellung bzw. in diese zurück.

Die vorstehend erwähnte Bewegung des Betriebskolbens (10, 15) aus seiner Lösestellung ist mit einer Verkleinerung der Atmosphärenkammer (13) verbunden. Deshalb wird bei dieser Bewegung Luft durch das Atmungsloch (14) in die umgebende Atmosphäre ausgeblasen. Bei der Rückbewegung des Betriebskolbens (10, 15) vergrößert sich die Atmosphärenkammer (13) wieder, weshalb dabei durch das Atmungsloch (14) Umgebungsluft in die Atmosphärenkammer (13) angesaugt wird. Aufgrund des mit den Bewegungen des Betriebskolbens (10, 15) verbundenen Luftaustausches zwischen Umgebung und Atmosphärenkammer (13) ist die Luft in letzterer stets mit den weiter vorn näher bezeichneten Verunreinigungen der Umgebungsluft befrachtet.

Die erwähnte Bewegung des Federspeicherkolbens (4) aus seiner Lösestellung ist mit einer Vergrößerung der Federkammer (19) verbunden. Bei dieser Vergrößerung tritt durch die Druckausgleichsleitung (5) Luft aus der Atmosphärenkammer (13) in die Federkammer (19) über. Die Drossel (8) in der Druckausgleichsleitung (5) und damit die Ausbildung der Druckausgleichsleitung (5) als Drosselleitung bewirken, daß mit der übertretenden Luft nicht auch alle im Luftinhalt der Atmosphärenkammer (13) enthaltenen Verunreinigungen in die Federkammer (19) übertreten. Infolge der Drosselwirkung der Druckausgleichsleitung (5) erfolgt der erwähnte Luftübertritt verzögert, wodurch weniger Verunreinigungen, insbesondere weniger Staubpartikel, mit der übertretenden Luft mitgerissen werden. Dieser Effekt wird besonders deutlich bei Ausführungen des Arbeitszylinders, in denen bei einer Betätigung des Federspeicherteils allein oder gemeinsam mit dem Betriebsteil (11) die Federkammer (19) sich mehr vergrößert als sich die Atmosphärenkammer (13) verkleinert. Eine solche Ausführung liegt beispielsweise vor, wenn die Kraftabgabe des Federspeicherteils (2) größer als diejenige des Betriebsteils (11) ist. In einem solchen Fall tritt nicht nur Luft aus der Atmosphärenkammer (13) in die Federkammer (19) über, sondern, über das Atmungsloch (14) und durch die Atmosphärenkammer (13) hindurch, auch direkt Umgebungsluft. Es liegt auf der Hand, daß in einem solchen Fall die Strömungsgeschwindigkeit in der Druckausgleichsleitung (5) und damit der Mitreißeffekt aus der Atmosphärenkammer (13) ohne die Ausbildung der Druckausgleichsleitung (5) als Drosselleitung besonders groß wäre.

Die durch die Ausbildung der Druckausgleichsleitung (5) als Drosselleitung bewirkte Verringerung des Übertritts an Verunreinigungen in die Federkammer (19) bewirkt eine Verminderung korrosiven und mechanischen Verschleißes der Innenwand der Federkammer (19), die ja die Lauf- und Dichtfläche des Federspeicherkolbens (4) ist. Die Verminderung des Zutritts von Verunreinigungen zur Federkammer (19) hat auch eine Verminderung der Korrosionsbelastung der Speicherfeder (1) zur Folge. Insgesamt erhöhen sich durch die erwähnten Vorteile der Ausbildung der Druckausgleichsleitung (5) als Drosselleitung die Betriebssicherheit und die Lebensdauer des Arbeitszylinders.

Beim teilweisen oder vollständigen Lösen des Federspeicherteils (2) und bei der damit zusammenhängenden Rückgängigmachung der bei der Betätigung eingetretenen Vergrößerung der Federkammer (19) schiebt der Federspeicherkolben (4) die zuvor aus der Atmosphärenkammer (13) bzw. der Umgebung übergetretene Luft in die Atmosphärenkammer (13) bzw. durch diese und das Atmungsloch (14) hindurch in die umgebende Atmosphäre zurück.

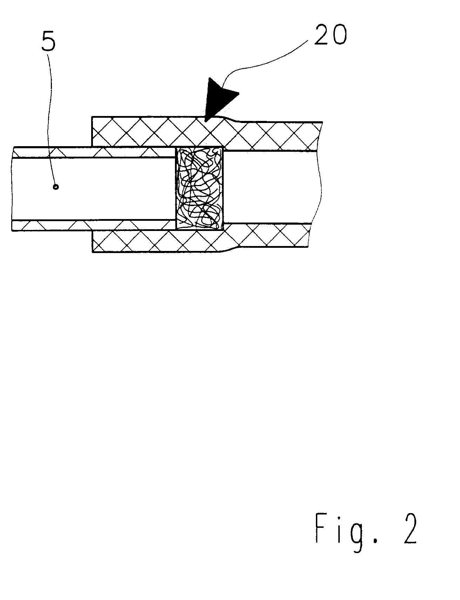

Fig. 2 zeigt eine Ausführung des Arbeitszylinders gemäß Fig. 1 mit einer anderen Ausgestaltung der der Ausbildung der Druckausgleichsleitung (5) als Drosselleitung dienenden Drossel. In diesem Fall ist in der Druckausgleichsleitung (5) ein Filtereinsatz (20) vorgesehen, dessen Durchlaßquerschnitt die Funktion der Drossel (8) des früheren Ausführungsbeispiels übernimmt. In diesem Fall tritt die Abscheidewirkung des Filtereinsatzes (20) zu der Abscheidewirkung der Drossel hinzu, so daß diese Ausführung eine besonders gute Rückhaltewirkung hinsichtlich der aus der Atmosphärenkammer (13) in die Federkammer (19) übertretenden Verunreinigungen erbringt. Andererseits ermöglicht diese Ausführung bei gleicher Abscheidewirkung einen größeren Drosselquerschnitt und damit einen schnelleren Luftübertritt aus der Atmosphärenkammer (13) in die Federkammer (19). Schließlich ist bei dieser Ausführung die Gefahr der Verstopfung des Drosselquerschnitts durch größere Partikel aus der Atmosphärenkammer (13) geringer.

Der Fachmann erkennt, daß die beschriebenen Ausführungsbeispiele den Schutzbereich der Erfindung nicht erschöpfend beschreiben, sondern daß der Schutzbereich der Erfindung vielmehr alle Ausgestaltungen erfaßt, deren Merkmale sich dem Patentansprüchen unterordnen.

## Patentansprüche

1. Arbeitszylinder mit einem Federspeicherteil (2) und einem Betriebsteil (11), in dem eine Federkammer (19) des Federspeicherteils (2) über eine Druckausgleichsleitung (5) mit einer Atmosphärenkammer (13) des Betriebsteils (11) verbunden ist,
dadurch gekennzeichnet,
daß in der Druckausgleichsleitung (5) eine Drossel (8) angeordnet ist.

2. Arbeitszylinder nach Anspruch 1,
dadurch gekennzeichnet,
daß die Drossel aus dem Durchlaßquerschnitt eines Filtereinsatzes (20) besteht.

## Claims

1. Working cylinder having a spring energy storage part (2) and an operating part (11), in which cylinder a spring chamber (19) of the spring energy storage part (2) is connected by way of a pressure-equalising line (5) to an atmospheric chamber (13) of the operating part (11), **characterised in that** a throttle (8) is arranged in the pressure-equalising line (5).

2. Working cylinder according to claim 1, **characterised in that** the throttle consists of the let-through cross-section of a filter insert (20).

## Revendications

1. Vérin de travail comprenant une partie formant accumulateur à ressort (2) et une partie de service (11), dans lequel une chambre à ressort (19) de la partie d'accumulateur à ressort (2) est reliée à une chambre atmosphérique (13) de la partie de service (11) via une conduite de compensation de pression (5),
caractérisé en ce que
un étranglement (8) est agencé dans la conduite de compensation de pression (5).

2. Cylindre de travail selon la revendication 1,
caractérisé en ce que
l'étranglement est constitué par la section de passage d'un insert filtrant (20).
